**Europäisches Patentamt**

**European Patent Office**

**Office européen des brevets**

(19)

(11) Veröffentlichungsnummer: **0 310 779**

**A2**

(12) # EUROPÄISCHE PATENTANMELDUNG

(21) Anmeldenummer: **88112682.5**

(22) Anmeldetag: **04.08.88**

(51) Int. Cl.⁴ **B29C 59/02 , B29C 43/20 , E04F 15/10**

(30) Priorität: **08.10.87 DE 3733969**

(43) Veröffentlichungstag der Anmeldung:
**12.04.89 Patentblatt 89/15**

(84) Benannte Vertragsstaaten:
**AT BE CH DE ES FR GB GR IT LI LU NL SE**

(71) Anmelder: **Firma Carl Freudenberg
Höhnerweg 2-4
D-6940 Weinheim/Bergstrasse(DE)**

(72) Erfinder: **Strzelczyk, Götz Florian
Wintergasse 142
D-6940 Weinheim-Lützels(DE)**

(74) Vertreter: **Weissenfeld-Richters, Helga, Dr.
Höhnerweg 2-4
D-6940 Weinheim/Bergstrasse(DE)**

(54) **Verfahren zur Herstellung eines mehrfarbigen Fussboden- oder Wandbelages mit oberflächlichen Erhebungen.**

(57) Es wird ein Verfahren zur Herstellung eines mehrfarbigen Fußboden- oder Wandbelages mit oberflächlichen Erhebungen vorgeschlagen. Zwei farblich voneinander abweichende Flächengebilde werden in einem mit Vertiefungen bzw. Erhöhungen versehenen Werkzeug zusammengefügt. Die an der Stelle der Vertiefungen bzw. Erhöhungen gebildeten Verformungen werden teilweise und so abgetragen, daß bei einem an sich bekannten Pastillenboden eine der erhöhten Sicherheit des Benutzers dienende zweifarbige Musterung entsteht.

EP 0 310 779 A2

## Fig. 2

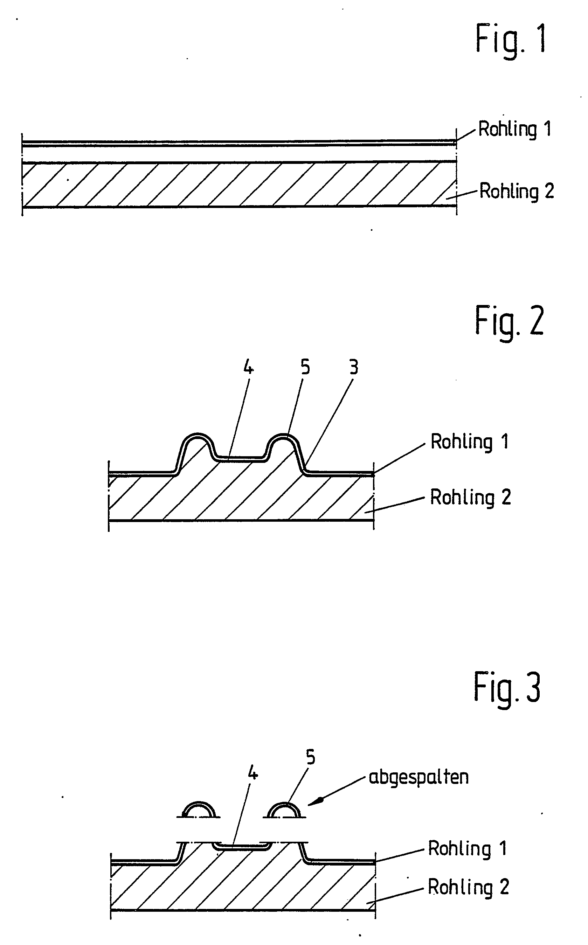

Fig. 2 — Rohling 1, Rohling 2 (4, 5, 3)

## Verfahren zur Herstellung eines mehrfarbigen Fußboden-oder Wandbelages mit oberflächlichen Erhebungen

Die Erfindung betrifft ein Verfahren zur Herstellung eines mehrfarbigen Fußboden- oder Wandbelages mit oberflächlichen Erhebungen, bei dem zwei farblich voneinander verschiedene Flächengebilde aus z. B. vulkanisierbarem Material durch Kalandrieren bzw. Pressen zusammengebracht und in einer einseitig mit Vertiefungen versehenen Vulkanisierpresse derart erhitzt werden, daß beide Flächengebilde eine feste Verbindung miteinander eingehen und der zweilagige Rohling gleichzeitig so umgeformt wird, daß Erhebungen auf der späteren Sichtseite entstehen und bei dem die Erhebungen dann oberflächlich abgeschliffen werden. Die abgeschliffenen Stellen können poliert und gegebenenfalls mit einem gummiverträglichen Lack bestrichen werden.

Ein derartiges Verfahren ist aus DE-PS 28 36 642 bekannt. Das bekannte Verfahren betrifft die Herstellung eines gattungsgemäßen mehrschichtigen Fußbodenbelages, der nach dem Abschleifen der oberflächlichen Erhebungen eine pastillenförmige Musterung aufweist. Der Fußbodenbelag ist insbesondere zu Auslegung großflächiger Räume und für Treppen vorgesehen. Im Hinblick auf die Rutschfestigkeit und somit auf die Sicherheit der Benutzer stellt der bekannte Belag eine optimale Lösung der vorliegenden Aufgabe dar. Der Belag wird deshalb auch in Problemfällen, z. B im Krankenhausbereich verlegt. Es hat sich jedoch als nachteilig erwiesen, daß die gleichmäßige Pastillenmusterung - gleich ob in ein- oder zweifarbiger Ausführung - insbesondere bei großen Flächen den Benutzer irritiert. Dieser Nachteil macht sich auch im Treppenbereich bemerkbar und führt unter Umständen zu Schwindelgefühl beim Begehen der Treppen oder Räume.

Der Erfindung liegt die Aufgabe zugrunde, den bekannten Belag dahingehend weiterzuentwickeln, daß bei unverändert guten Gebrauchseigenschaften keine Irritierung der Benutzer eintritt. Die Weiterentwicklung dient somit der Erhöhung der Sicherheit. Eine weiter Aufgabe liegt darin, die an sich gute Abriebfestigkeit des bekannten Bodens noch weiter zu steigern.

Die Aufgabe wird gelöst durch den kennzeichnenden Teil des in den Patentansprüchen beschriebenen Verfahrens. Überraschenderweise hat es sich gezeigt, daß nach dem Abschleifen der Wülste der oberflächlichen Erhebungen ein pastillenförmiger Belag erhalten wird, der dem Betrachter bzw. Benutzer gegenüber dem bekannten Boden ein ruhigeres Bild vermittelt. Dadurch wird jegliche Irritierung des Benutzers vermieden. Es ergibt sich ein erhöhtes Sicherheitsgefühl, das insbesondere auch bei Treppenbelägen von Vorteil ist. Auch bei sehr großen Räumen, z. B. in Flughäfen oder dergleichen ist keine Beeinträchtigung zu befürchten.

Die bei dem bekannten Verfahren nach DE-PS 28 36 642 erhaltene an sich optimale geometrische Gestaltung der Pastillen und die dadurch gebildeten Trittflächen bleiben erhalten. Die Abriebfestigkeit kann dadurch gesteigert werden, daß der obere Rohling aus einem abriebfesteren Material besteht. Durch die anmeldungsgemäße Gestaltung der Vulkanisierpresse und die vorgeschlagene Schliffvariante ergibt sich dann eine Sicht- bzw. Gehseite mit erhöhter mechanischer Belastbarkeit.

Die beiden Gummirohlinge werden vor dem Vulkanisieren und Verformen zunächst durch Kalandrieren zusammengebracht. Der so gebildete zweilagige Rohling kann durch einseitiges Erhitzen anvulkanisiert werden, wodurch die beiden Schichten noch fester miteinander verbunden werden.

Die eigentliche Vulkanisation erfolgt aber in der Vulkanisierpresse, in der gleichzeitig die später auf der Sichtseite entstehenden Erhebungen geformt werden. In an sich bekannter Weise werden zwei derartige verschiedenfarbige Rohlinge aufeinanderkalandriert, die unterschiedlich stark sind. Obgleich die Schichtstärke variabel ist und dem jeweiligen Verwendungszweck angepaßt werden kann, haben sich Schichtstärken bewährt, die etwa um den Faktor 4 bis 5 voneinander verschieden sind. Ein erhöhter Trittkomfort wird erreicht, wenn die Unterschicht relativ dick ist, bezogen auf die Oberschicht. Die Oberschicht ist in jedem Falle deutlich dünner als die Unterschicht.

Vor dem eigentlichen Verformen des zweischichtigen Gebildes in der Vulkanisierpresse ist es zweckmäßig, eine der Schichten z. B. mit Hilfe einer beheizten Trommel anzuvulkanisieren. Dieser Arbeitsgang wird in einfacher Weise nach dem Zusammenkalandrieren angefügt. Durch entsprechende Drehung des Zweischichtengebildes kann wahlweise die obere oder die untere Schicht anvulkanisiert werden. Man erhält so einen festeren Verbund und später beim Abschleifen nach der Verformung eine sauberere Schichtentrennung.

Nach dem Verformen des zweischichtigen Flächengebildes in der Vulkanisierpresse wird der Wulst der oberflächlichen Erhebungen vollständig abgeschliffen. Zweckmäßig liegt die Schlifffläche in der Ebene der planen, nicht geschliffenen Stirnflächen der Erhebungen. Obgleich man auf diese Weise die Pastillenform des bekannten Verfahrens erhält, ergibt sich für den Betrachter ein ruhiges und angenehmes Bild, so daß keine Irritationen befürchtet werden müssen. Durch geeignete farbliche Gestaltung der beiden Rohlinge läßt sich die Sicherheit im Gebrauch noch steigern.

Das erfindungsgemäße Verfahren wird durch Figur 1 bis 3 erläutert.

Figur 1 zeigt den dünneren Rohling 1, der z. B. 0,5 - 2 mm dick ist. Der Rohling 2 hat eine Stärke von z. B. 2 - 8 mm. Beide Rohlinge werden durch Kalandrieren miteinander verbunden und gegebenenfalls durch einseitiges Bearbeiten mit einer auf etwa 160°C vorgeheizten Trommel anvulkanisiert werden.

Figur 2 zeigt den aus Rohling 1 und Rohling 2 bestehenden Verbundkörper, der so in eine heizbare Vulkanisierpresse gelegt wird, daß der Rohling 1 die Formseite zeigt, die später die Pastillenoberfläche ausbildet. Die Pastillen 3 weisen eine plane Stirnfläche 4 auf, die ringsum von einem Wulst 5 umgeben ist. Der Wulst 5 wird später nach dem Preßvorgang mit Hilfe einer Spalt- oder Schleifmaschine so entfernt, daß die plane Stirnfläche 4 der Pastillen erhalten bleibt.

Figur 3 zeigt das fertige Gebilde nach dem Schleifen. Der Wulst 5 ist abgespalten und die plane Stirnfläche 4 ist ringsum von dem Material des Rohlings 2 umgeben. Die abgeschliffene bzw. abgespaltene Fläche kann anschließend zur Erhöhung des Gehkomforts und der Abriebfestigkeit poliert und mit gummiverträglichem Lack bestrichen werden.

Das optische Bild des Pastillenbelages und damit der Grad der Sicherheit hängt im wesentlichen von der Gestaltung der Basisfläche des Wulstes 5 ab. Es ergibt sich ein ruhigeres Bild, wenn ein solcher Wulst ausgebildet wird, der ringsum eine gleichförmige Wandstärke aufweist. Wenn auf der gesamten Bodenfläche oder an einzelnen Stellen eine stärkere Abweichung erwünscht ist, empfiehlt es sich, dem Wulst eine unterschiedliche Wandstärke bzw. Grundflächengestaltung zu geben. Eine unterschiedliche Musterung ist insbesondere bei Nutzräumen und großen Treppenflächen von Vorteil.

Das nachfolgende Beispiel erläutert die Herstellung eines erfindungsgemäßen Belages mit farblich abweichender pastillenförmiger Musterung and der Oberfläche.

Beispiel:

Es werden zunächst zwei verschiedenstarke Rohlinge entsprechend der nachstehenden Rezeptur in einem Kneter hergestellt, wobei der Rohling 1 ca. 1 mm und der Rohling 2 ca. 4 mm stark ist. 100 Gewichtsteile Styrolbuthadienkautschuk werden vermischt mit 5 Gewichtsteilen Zinkoxyd, ein Gewichtsteil Stearinsäure, 40 Gewichtsteilen aktiver Kieselsäure, 60 Gewichtsteilen Kieselkreide, 2,5 Gewichtsteilen Triäthanolamin, 1 Gewichtsteil Paraffin, 2,3 Gewichtsteilen Schwefel, 1,2 Gewichtsteilen Benzothiazyl-2-Cyclohexylsulfinamid (CBS) und 1 Gewichtsteil eines geeigneten Alterungsschutzmittels. Je nach gewünschter Produktfarbe werden organische oder anorganische Farbpigmente zugesetzt.

Beide Mischungen werden mit Hilfe eines Kalanders zu Folien oder Bahnen der angegebenen Stärke ausgezogen. In einer kontinuierlichen Vulkanisiermaschine werden beide Bahnen vorvulkanisiert, wobei die dünnere Bahn (Rohling 1) gegen den auf 160°C geheizten Zylinder der Vulkanisiermaschine läuft. Hierbei werden beide Schichten vereinigt und gleichzeitig der dem beheizten Zylinder zugewandte Teil der Bahn so vorvulkanisiert, daß beim anschließenden Ausheizen der Presse, wo gleichzeitig auch die Ausbildung der Erhebungen stattfindet, kein Ineinanderfließen der Bahnen mehr erfolgt. Die Fließbarkeit der Schichten ist noch so groß, daß eine feste und homogene Verbindung stattfindet. Es werden kegelstumpfförmige Pastillen gepreßt, deren Stirnfläche plan ist und gleichmäßig von einem 1,5 bis 2 mm dicken Wulst gleichmäßiger Wandstärke umgeben ist. Die Wandstärke des Wulstes beträgt etwa 5 bis 8 mm.

Der Wulst wird anschließend abgeschliffen, wobei die plane Stirnfläche der kegelstumpfförmigen Erhebungen (Pastillen) unverändert erhalten bleibt. Man erhält so eine ausvulkanisierte Platte mit pastillenförgimen Erhebungen, wobei die Pastillen an ihrer oberen planen Stirnfläche an der Stelle des abgeschliffenen Wulstes von einem Ring umgeben sind, bei dem das Material der Unterseite (Rohling 2) zum Vorschein kommt.

Die Pastillen können anschließend noch feingeschliffen und mit einem gummiverträglichen Lack versehen werden. Durch eine ungleichmäßige Gestaltung der Wulststärke erhält man nach dem Abschleifen ein ungleichmäßigeres Bild auf der Sichtfläche des Belages. Dies ist in vielen Fällen in Hinblick auf eine erhöhte Sicherheit gewünscht.

Das Verfahren gestattet auch die Anbringung von Piktogrammen, Beschriftungen oder dergleichen, die auf diese Weise ebenfalls in abriebfester und haltbarer Form mit dem Fußboden verbunden werden können.

**Ansprüche**

1. Verfahren zur Herstellung eines mehrfarbigen Fußboden-oder Wandbelages mit oberflächlichen Erhebungen, bei dem zwei farblich voneinander verschiedene Flächengebilde aus vulkanisierbarem Material durch Kalandrieren zusammengebracht und in einer einseitig mit Vertiefungen versehenen Vulkanisierpresse derart erhitzt werden, daß beide Flächengebilde eine feste Verbindung miteinander eingehen und der zweilagige Rohling gleichzeitig so umgeformt wird, daß Erhebungen auf der späteren Sichtseite entstehen und bei dem die Erhebungen dann oberflächlich abgeschliffen werden und die abgeschliffenen Stellen poliert und gegebenenfalls mit einem gummiverträglichen Lack bestrichen werden, dadurch gekennzeichnet, daß der zweilagige Rohling in der Vulkanisierpresse unter Bildung solcher Erhebungen umgeformt wird, die eine plane, von einem erhabenen ringsumlaufenden Wulst umgebene Stirnseite aufweisen, und daß der Wulst dann anschließend abgeschliffen wird.

2. Verfahren nach Anspruch 1, dadurch gekennzeichnet, daß der Wulst soweit abgeschliffen wird, daß die Schlifffläche in der Ebene der planen, nicht geschliffenen Stirnflächen der Erhebungen liegt.

3. Verfahren nach einem der Ansprüche 1 oder 2, dadurch gekennzeichnet, daß in der Vulkanisierpresse kegelstumpfförmige Erhebungen gebildet werden.

4. Verfahren nach einem der Ansprüche 1 bis 3, dadurch gekennzeichnet, daß in der Vulkanisierpresse solche·Erhebungen gebildet werden, deren plane Stirnflächen von einem erhabenen Wulst mit ringsum gleichförmiger Wandstärke umgeben sind.

5. Verfahren nach einem der Ansprüche 1 bis 3, dadurch gekennzeichnet, daß in der Vulkanisierpresse solche Erhebungen gebildet werden, deren plane Stirnflächen von einem erhabenen Wulst mit unterschiedlicher Wandstärke bzw. unregelmäßiger Grundflächengestaltung umgeben sind.

6. Verfahren nach einem der Ansprüche 1 bis 5, dadurch gekennzeichnet, daß ein zweilagiger Rohling verarbeitet wird, dessen Schichten sich in ihrer Stärke um den Faktor 4 bis 5 unterscheiden.

7. Verfahren nach einem der Ansprüche 1 bis 6, dadurch gekennzeichnet, daß in der Vulkanisierpresse gleichzeitig solche Erhebungen gebildet werden, die nach dem Abschleifen Piktogramme, Zahlen oder Buchstaben ergeben.

# Fig. 1

Rohling 1

Rohling 2

# Fig. 2

4    5    3

Rohling 1

Rohling 2

# Fig. 3

4    5    abgespalten

Rohling 1

Rohling 2